# FASCICULE DE BREVET EUROPEEN

(11) **EP 0 715 184 B1**
(45) Date de publication et mention de la délivrance du brevet: **30.01.2002**
(21) Numéro de dépôt: 95402599.5
(22) Date de dépôt: 20.11.1995
(51) Int. Cl.: G01S 13/28, G01S 13/58

(54) **Procédé et dispositif pour déterminer la vitesse d'un mobile au moyen d'un radar ou sonar à compression d'impulsion**
Verfahren und Vorrichtung zur Bestimmung der Geschwindigkeit eines bewegbaren Körpers mittels eines Radars oder Sonars mit Impulskompression
Method and apparatus for determining the speed of a movable body by means of a radar or sonar using pulse compression

(30) Priorité: 01.12.1994 FR 9414441
(43) Date de publication de la demande: 05.06.1996
(73) Titulaire: AEROSPATIALE MATRA, 75016 Paris (FR)
(72) Inventeur: Pouit, Christian, F-92500 Rueil Malmaison (FR)
(74) Mandataire: Bonnetat, Christian

(56) Documents cités:
- DE-A- 4 119 509
- US-A- 4 849 760
- APPLIED OPTICS, vol. 31, no. 6, 20 Février 1992 NEW YORK , NY , USA, pages 801-8, XP 000248592 JON Y. WANG ET P. ANDREW PRUITT 'Effects of speckle on the range precision of a scanning lidar'

## Description

La présente invention concerne un procédé pour déterminer, au moyen d'un dispositif de télédétection du type radar ou sonar à compression d'impulsion, la vitesse d'une cible qui est mobile en direction dudit dispositif de télédétection, ainsi qu'un dispositif pour la mise en oeuvre dudit procédé.

Dans le cadre de la présente invention, on entend par impulsion un groupe d'oscillations susceptible d'être soumis à une compression, tel que décrit ci-dessous.

Pour des raisons de simplification de la description, on présentera l'invention ci-après uniquement en relation avec un système de télédétection du type radar. Toutefois, toutes les caractéristiques de l'invention qui seront présentées en référence à un tel radar s'appliquent bien entendu également de même à un sonar.

La présente invention s'applique plus précisément aux radars ou sonars à compression d'impulsion qui émettent des impulsions modulées en fréquence selon une loi de variation linéaire et continue. De façon connue, de telles impulsions émises par un radar sont captées après réflexion sur une cible à analyser, puis sont traitées. Le traitement est destiné à réduire leur durée et à augmenter leur amplitude. Ces impulsions ainsi traitées ou "comprimées" permettent de calculer de façon très précise la distance entre ladite cible et ledit radar. Il est donc possible d'équiper un tel radar à compression d'impulsion d'un moyen de télémétrie précis présentant un bon pouvoir de résolution en distance.

Toutefois, les mesures de distance effectuées par un radar équipé d'un tel moyen de télémétrie sont faussées lorsque la cible est mobile par rapport audit radar, en raison d'un phénomène d'ambiguïté entre la vitesse et la distance qui est caractéristique de la modulation linéaire de fréquence. Par exemple, lorsque le radar émet une impulsion dont la fréquence croît linéairement au cours du temps, une cible mobile qui s'éloigne dudit radar est localisée à une distance plus grande que la distance réelle, et inversement lorsque la cible mobile s'approche dudit radar. Ces erreurs de mesure sont inversées lorsque le radar émet une impulsion dont la fréquence décroît au cours du temps.

De façon connue, on peut éliminer ce défaut du radar à compression d'impulsion en modulant l'impulsion émise, selon une loi de fréquence croissante pendant la première moitié de la durée d'émission, puis selon une loi de fréquence décroissante pendant la seconde moitié de la durée d'émission, ou inversement. Dans ces conditions d'émission, l'impulsion captée et traitée permet de calculer de façon précise la distance entre la cible mobile et le radar.

L'objet de la présente invention est d'associer à un tel radar à compression d'impulsion, permettant de déterminer de façon précise la distance d'une cible, un moyen permettant de déterminer de plus la vitesse de ladite cible lorsque cette dernière est mobile en direction dudit radar.

Un example d'un tel radar de l'art antérieur est par example présenté dans le document US-4 849 760.

On notera aussi que le document US-5 294 932 divulgue un procédé permettant de mesurer simultanément la vitesse et la distance d'une cible mobile au moyen d'un radar. Toutefois, ce procédé s'applique à un radar à haute fréquence de récurrence qui est, par conception, extrêmement précis pour la mesure de vitesse et qui est en particulier bien adapté à la fonction veille de radars aéroportés. Le procédé décrit dans ce document permet d'associer à cette mesure de vitesse une mesure de distance qui présente toutefois une précision limitée.

Par conséquent, le document américain précité et la présente invention s'appliquent à des types de radar différents, aussi bien en ce qui concerne les fréquences utilisées qu'en ce qui concerne les mesures effectuées, puisque la présente invention est mise en oeuvre, comme indiqué précédemment, sur un radar à compression d'impulsion qui fonctionne à basse ou moyenne fréquence de récurrence et qui est, par conception, très précis pour la mesure de distance. Ce mode de fonctionnement est mis en oeuvre en particulier dans les radars de télédétection.

Il n'existe actuellement aucun moyen permettant de déterminer la vitesse d'une cible mobile à partir d'un tel radar à compression d'impulsion.

La présente invention a pour objet de combler cette lacune de l'état de la technique.

A cet effet, selon l'invention, le procédé pour déterminer, au moyen d'un dispositif de télédétection du type radar ou sonar à compression d'impulsion, la vitesse d'un mobile en direction dudit dispositif de télédétection, est remarquable en ce que :
- on émet deux impulsions associées et modulées en fréquence selon des lois de variation linéaires et continues, l'une desdites impulsions étant modulée selon une loi de variation croissante et l'autre selon une loi de variation décroissante ;
- on détecte lesdites impulsions après leur réflexion sur ledit mobile ;
- on traite lesdites impulsions détectées de manière à réduire leur durée et à augmenter leur amplitude ;
- on forme un signal de somme par l'addition des deux impulsions ainsi traitées ;
- on forme un signal de différence par la soustraction des deux impulsions ainsi traitées ; et
- on déduit la vitesse dudit mobile à partir desdits signaux de somme et de différence.

Ainsi, grâce à l'invention, on sait mesurer la vitesse d'un mobile au moyen d'un radar ou d'un sonar à compression d'impulsion, à partir du traitement desdites deux impulsions.

De plus, ces deux impulsions sont modulées en fréquence, respectivement selon une loi de variation croissante et une loi de variation décroissante, ce qui permet de remédier au phénomène d'ambiguïté décrit précédemment et existant entre la vitesse et la distance lors de la modulation linéaire de fréquence, de façon à pouvoir effectuer simultanément à ladite mesure de vitesse une mesure de distance non erronée.

On notera qu'il existe plusieurs méthodes connues pour calculer la vitesse du mobile à partir desdits signaux de somme et de différence. Toutefois, de préférence, on détermine ladite vitesse au moyen des opérations suivantes :
- on divise le signal de différence par la valeur maximale du signal de somme ;
- on calcule la dérivée du signal de différence ainsi divisé ; et
- on déduit la vitesse du mobile à partir de ladite dérivée, ladite dérivée étant proportionnelle à la vitesse à l'instant où ledit signal de somme présente sa valeur maximale.

Selon une caractéristique avantageuse de l'invention, on émet les deux impulsions modulées respectivement selon une loi croissante et selon une loi décroissante, simultanément, ce qui permet d'effectuer les calculs dès la réception de ces deux impulsions détectées bien entendu simultanément et permet de simplifier le dispositif destiné à la mise en oeuvre du procédé. On notera que, dans ce cas, la vitesse du mobile peut donc être calculée à partir d'une seule détection d'impulsions.

Toutefois, selon une variante de mise en oeuvre de l'invention, on peut également émettre les deux impulsions successivement après un temps de retard déterminé et on prend en compte dans ce cas ce temps de retard lors de la détection et lors du traitement des impulsions, après leur réflexion sur le mobile.

Comme rappelé précédemment, le dispositif de télédétection auquel est appliqué l'invention permet toujours de déterminer avec précision la distance entre le mobile et ledit dispositif de télédétection. De préférence, cette distance est déterminée, selon l'invention, à partir dudit signal de somme.

La présente invention concerne également un dispositif de télédétection pour la mise en oeuvre du procédé précité.

Selon l'invention, ledit dispositif de télédétection du type comportant :
- un système émetteur susceptible d'émettre des impulsions modulées en fréquence ;
- un système récepteur susceptible de détecter les impulsions émises par ledit système émetteur et réfléchies par le mobile ; et
- un système de traitement de signal associé audit système récepteur,
est remarquable en ce que ledit système émetteur est susceptible d'émettre deux impulsions associées, dont l'une est modulée selon une loi de variation croissante et l'autre est modulée selon une loi de variation décroissante, et en ce que ledit système de traitement de signal comporte :
- deux moyens de corrélation destinés à réduire la durée et à augmenter l'amplitude des impulsions détectées, chacun desdits moyens de corrélation étant adapté à l'une desdites impulsions ;
- un moyen d'addition destiné à effectuer l'addition des deux impulsions traitées ;
- un moyen de soustraction destiné à effectuer la soustraction des deux impulsions traitées ; et
- un calculateur relié auxdits moyens d'addition et de soustraction et susceptible de déterminer la vitesse du mobile.

De façon avantageuse, ledit système émetteur comporte :
- un générateur de signal susceptible d'engendrer un signal modulé par des fréquences croissantes ;
- un générateur de signal susceptible d'engendrer un signal modulé par des fréquences décroissantes ;
- un moyen de sommation regroupant les signaux engendrés par lesdits générateurs de signal ; et
- un moyen d'émission commandé par lesdits signaux et émettant des impulsions correspondantes.

Par ailleurs, lorsque les deux impulsions sont émises successivement après une durée déterminée, le dispositif conforme à l'invention comporte avantageusement un système de retard qui est monté en série avec le moyen de corrélation traitant l'impulsion émise la première, ledit système de retard retardant la transmission des informations reçues pendant un temps correspondant à ladite durée déterminée.

En outre, selon une variante de réalisation de l'invention, un système de retard, retardant pendant une durée déterminée la transmission des informations reçues, peut être monté en série avec chacun desdits moyens de corrélation, en aval de ces derniers dans le sens de transmission des informations. Les moyens d'addition et de soustraction font dans ce cas l'addition et la soustraction des différentes associations possibles des signaux retardés et non retardés, et forment donc plusieurs signaux de somme et de différence, ce qui permet d'augmenter le domaine de calcul des vitesses susceptibles d'être déterminées par le dispositif conforme à l'invention.

La présente invention peut être appliquée à différents types de radar, en particulier à un radar à synthèse d'ouverture, embarqué à bord d'un aéronef et destiné à la surveillance d'un territoire.

Dans ce cas, le dispositif conforme à l'invention peut former avantageusement, à partir des informations disponibles à la sortie dudit calculateur :
- d'une part, une image des cibles fixes et mobiles situées sur ledit territoire, à partir dudit signal de somme ; et
- d'autre part, une image des cibles mobiles, à partir dudit signal de différence, ledit signal de différence permettant de plus de calculer la vitesse desdites cibles mobiles.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 illustre la détermination des impulsions modulées en fréquence, destinées à être émises.

La figure 3 montre le résultat de la compression d'un signal capté et traité.

La figure 4 montre le signal de somme formé conformément à l'invention.

La figure 5 montre le signal de différence formé conformément à l'invention.

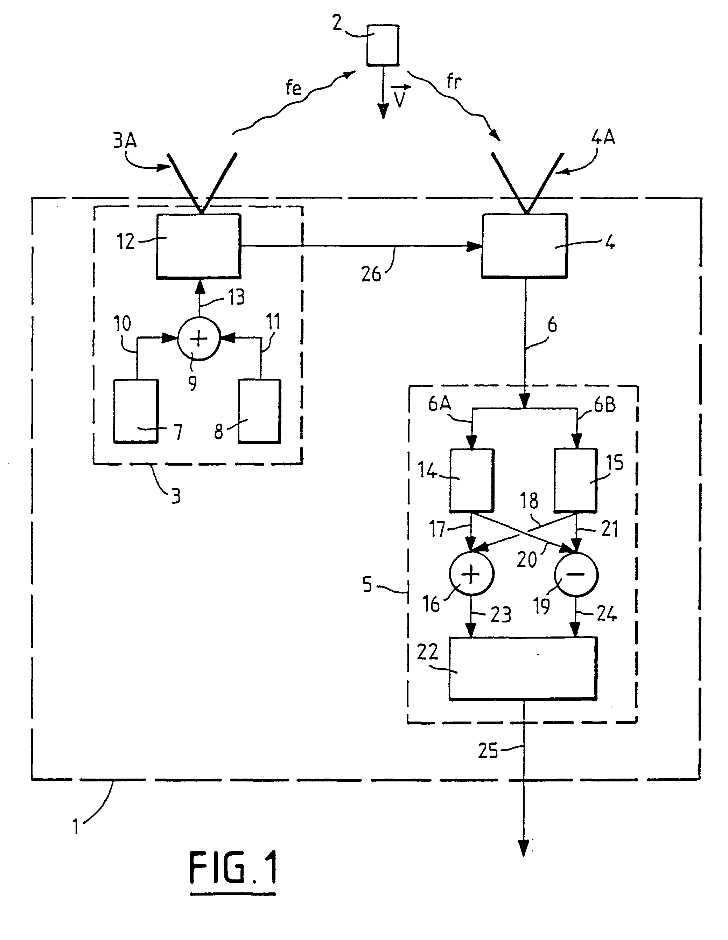

Le dispositif de télédétection 1, du type radar ou sonar à compression d'impulsion, réalisé conformément à l'invention est représenté schématiquement sur la figure 1. Ledit dispositif 1 qui permet de déterminer, de façon connue, avec une très grande précision, la distance entre ledit dispositif 1 et une cible, en particulier une cible mobile 2, est perfectionné selon l'invention de manière à pouvoir déterminer de plus la vitesse V de ladite cible 2, en direction dudit dispositif 1.

On sait que les radars à compression d'impulsion sont particulièrement bien adaptés pour effectuer des mesures de distances destinées à la cartographie ou utilisées lors de la poursuite d'engins aériens.

De façon connue, ledit dispositif de télédétection 1 comporte :
- un système émetteur 3 susceptible d'émettre au moyen d'une antenne 3A, tel qu'illustré par une flèche fe, des impulsions modulées en fréquence selon des lois de variation linéaires et continues ;
- un système récepteur 4 susceptible de capter au moyen d'une antenne 4A les impulsions émises par ledit système émetteur 3 et réfléchies par ladite cible 2, tel qu'illustré par une flèche fr ; et
- un système de traitement de signal 5 relié par une liaison 6 audit système récepteur 4.

Généralement, lesdites antennes 3A et 4A sont réalisées sous forme d'une antenne unique. On a néanmoins distingué ces antennes 3A et 4A sur la figure 1 afin de bien différencier sur le dispositif 1 la partie destinée à l'émission de celle destinée à la réception.

On notera en outre que le système récepteur 4 du type connu ne doit pas être réalisé de manière spécifique pour la mise en oeuvre de la présente invention. Pour cette raison, ledit système récepteur 4, qui comporte de façon connue au moins un mélangeur, un oscillateur local et un amplificateur de fréquence intermédiaire non représentés, n'est pas décrit plus en détail dans la description qui suit.

Il en va différemment du système émetteur 3 et du système de traitement de signal 5 qui sont formés, conformément à l'invention, de manière spécifique pour permettre la détermination de la vitesse V de la cible 2.

En effet, selon l'invention, ledit système émetteur 3 comporte, tel que représenté sur la figure 1 :
- un générateur de signal 7 susceptible d'engendrer un signal modulé en fréquence par une loi de variation croissante ;
- un générateur de signal 8 susceptible d'engendrer un signal modulé en fréquence par une loi de variation décroissante ;
- un moyen de sommation 9 relié par l'intermédiaire de liaisons 10 et 11 respectivement auxdits générateurs de signal 7 et 8 et regroupant les signaux engendrés par lesdits générateurs de signal 7 et 8 ; et
- un moyen d'émission 12 muni de ladite antenne 3A et relié par une liaison 13 audit moyen de sommation 9, ledit moyen d'émission 12 étant commandé par les signaux fournis par ledit moyen de sommation 9 et émettant des impulsions correspondantes, à savoir des ondes (ou groupes d'oscillations) électromagnétiques dans le cas d'un radar et des ondes sonores dans le cas d'un sonar.

Le système de traitement de signal 5 comporte, quant à lui, conformément à l'invention :
- un moyen de corrélation 14 destiné à traiter les impulsions modulées en fréquence par une loi de variation croissante et captées par ledit système récepteur 4, ledit moyen de corrélation 14 étant relié audit système récepteur 4 par une branche 6A de la liaison 6 dédoublée en deux branches 6A et 6B ;
- un moyen de corrélation 15 relié par la branche 6B de la liaison 6 au système récepteur 4 et destiné à traiter les impulsions modulées en fréquence par une loi de variation décroissante ;
- un moyen d'addition 16 relié par des liaisons 17 et 18 respectivement auxdits moyens de corrélation 14 et 15 ;
- un moyen de soustraction 19 relié auxdits moyens de corrélation 14 et 15 respectivement par l'intermédiaire de liaisons 20 et 21 ; et
- un calculateur 22 relié auxdits moyens d'addition 16 et de soustraction 19 respectivement par des liaisons 23 et 24 et susceptible de transmettre des informations par une liaison 25.

On notera que le dispositif 1 conforme à l'invention peut bien entendu être mis en oeuvre en utilisant les techniques du traitement numérique des signaux.

On présente à présent le mode de détermination de la vitesse V de la cible mobile 2 par ledit dispositif de télédétection 1 décrit précédemment.

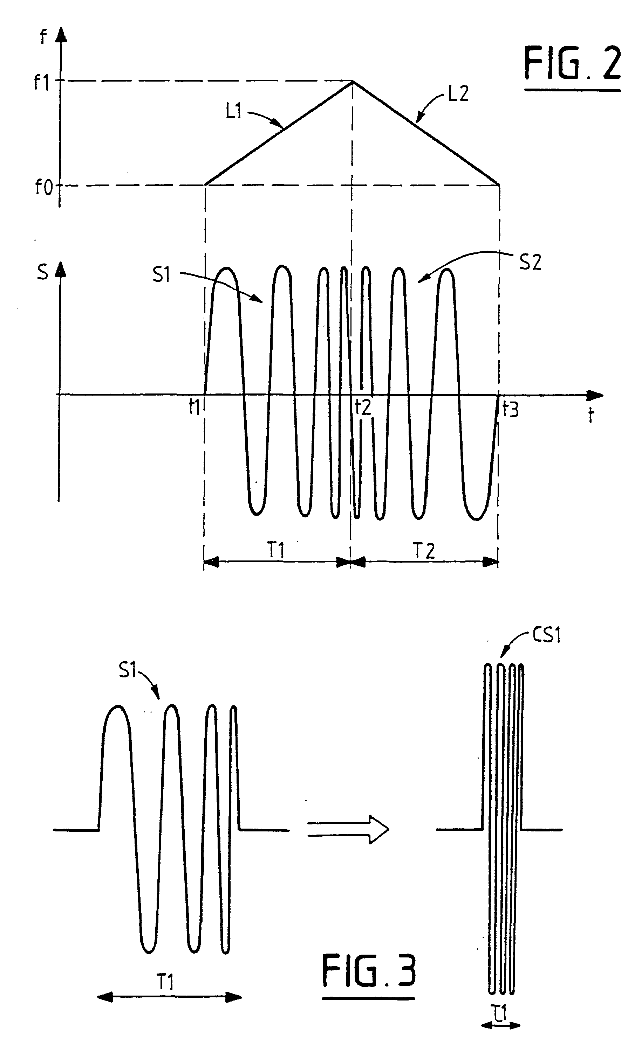

Selon l'invention, le générateur de signal 7 engendre un signal S1 de durée T1 modulé en fréquence selon une loi de variation continue, linéaire et croissante L1, tel que représenté sur la figure 2. La fréquence f dudit signal Si varie dans ce cas d'une fréquence f0 à une fréquence f1.

Le générateur de signal 8, quant à lui, engendre un signal S2 de durée T2 modulé en fréquence selon une loi de variation continue, linéaire et décroissante L2, la fréquence f dudit signal S2 décroissant de ladite fréquence f1 à ladite fréquence f0. Lesdites durées T1 et T2 sont égales.

Pour bien mettre en évidence la correspondance existant entre ces deux signaux S1 et S2, on les a raccordés ensemble sur la représentation de la figure 2, le signal S1 étant formé entre des instants t1 et t2 et le signal S2 entre des instants t2 et t3.

Les deux signaux Si et S2 ainsi définis sont transmis au moyen de sommation 9 qui les regroupe en un signal double S qui est formé de sorte que lesdits signaux Si et S2 puissent être émis simultanément.

A cet effet, le signal double S ainsi formé et transmis au moyen d'émission 12 est émis par ce dernier sous forme d'impulsions en direction de la cible mobile 2.

Après réflexion sur ladite cible mobile 2, ledit signal S est capté par le système récepteur 4 et il est traité par le système de traitement de signal 5.

La partie S1 du signal S capté est traitée dans le moyen de corrélation 14 et la partie S2 dudit signal S est traitée dans le moyen de corrélation 15. Lesdits moyens de corrélation 14 et 15 traitent les signaux reçus de façon connue de manière à augmenter leurs amplitudes et à réduire leurs durées. Lesdits moyens 14 et 15 utilisent à cet effet le signal S initial, qui est transmis par le système émetteur 3 au système récepteur 4 par une liaison 26, et par ce dernier auxdits moyens de corrélation 14 et 15.

On a représenté sur la figure 3 le traitement de la partie S1 du signal S par le moyen de corrélation 14. Ladite partie S1, de durée T1 à l'entrée dudit moyen de corrélation 14, présente à sa sortie, tel que représenté sur la figure 3, une forme CS1 de durée τ1 qui vérifie la relation suivante τ1 = (T1)/ρ, avec ρ le taux de compression du signal. La partie S2 du signal S est traitée de manière identique par le moyen de corrélation 15.

Les signaux ainsi traités sont faiblement décalés en temps à la sortie respectivement desdits moyens de corrélation 14 et 15, mais les phases de ces signaux sont très différentes, en raison de l'effet Doppler traité différemment dans les deux cas. A partir de ce décalage de phase, on est en mesure de déterminer la vitesse de la cible 2.

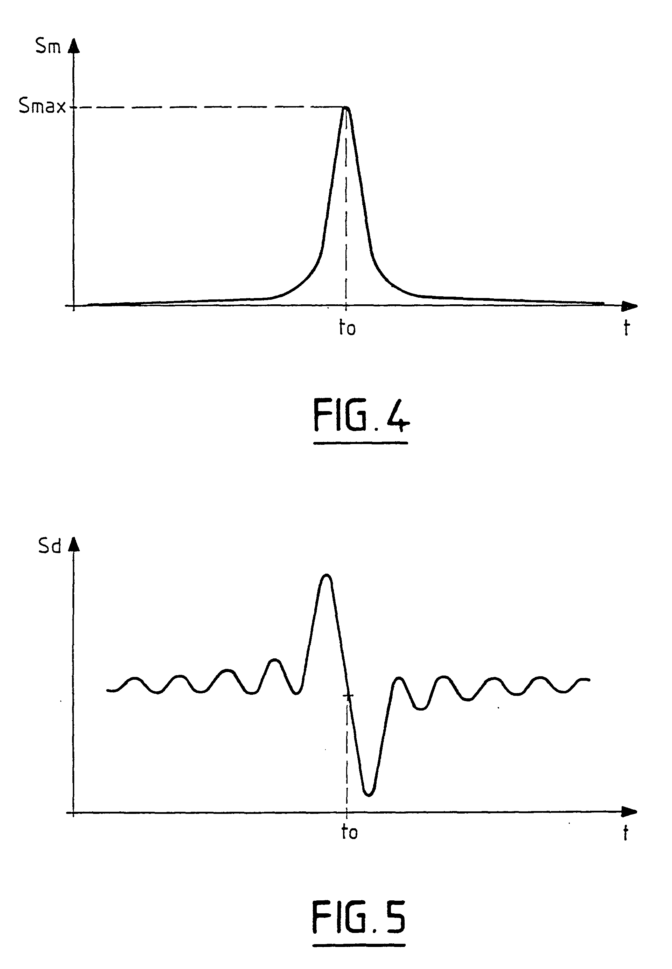

A cet effet, les signaux S1 et S2 ainsi traités et corrélés sont additionnés par le moyen d'addition 16. On obtient à la sortie dudit moyen d'addition 16 un signal de somme Sm représenté sur la figure 4. Ledit signal de somme Sm présente un maximum Smax à un temps to. A partir dudit signal de somme Sm, on peut déterminer de façon connue la distance entre le dispositif 1 et la cible 2.

En outre, les signaux traités par les moyens de corrélation 14 et 15 sont transmis au moyen de soustraction 19 qui effectue la soustraction des deux signaux reçus. On obtient dans ce cas à la sortie dudit moyen de soustraction 19 un signal de différence Sd, dont on a représenté la composante réelle sur la figure 5.

Ledit signal de différence Sd présente une pente qui dépend de la vitesse V de la cible mobile 2, à l'instant to où le signal de somme Sm est maximal.

Pour déterminer ladite vitesse, il est nécessaire pour des raisons d'ordre de grandeur de diviser le signal de différence Sd par la valeur maximale Smax du signal de somme Sm de manière à obtenir un signal S0 = (Sd) / Smax.

La variation de la dérivée S0' dudit signal S0, déterminée à l'instant to où le signal de somme Sm est maximal, est proportionnelle à la vitesse V.

On obtient donc la relation suivante : V = K.S0', K étant une constante de proportionnalité susceptible d'être déterminée par calibration et enregistrée dans le calculateur 22.

Par conséquent, ledit calculateur 22 qui, d'une part, connaît ladite constante de proportionnalité K et, d'autre part, est susceptible de déterminer la valeur S0' à partir des informations reçues du moyen d'addition 16 et du moyen de soustraction 19, peut calculer la vitesse V de ladite cible mobile 2 à partir de la relation citée précédemment, et transmettre le résultat par la liaison 25, par exemple à un moyen d'affichage non représenté. Le calcul de la vitesse peut donc être effectué itérativement après chaque détection desdits signaux S1 et S2 émis simultanément.

Dans le mode de réalisation décrit précédemment, les deux signaux S1 et S2 sont donc émis simultanément pendant la même période d'émission.

Toutefois, selon une variante de réalisation de l'invention non représentée, lesdits signaux Si et S2 peuvent être émis successivement après un temps de retard déterminé Tr. Par exemple, le signal S1 est émis à un instant t et le signal S2 est émis à un instant ultérieur t+Tr. Dans ce cas, il est nécessaire de tenir compte de ce temps de retard Tr lors du traitement des signaux dans le système de traitement de signal 5.

A cet effet, ledit système de traitement de signal 5 comporte un système de retard non représenté et monté en série avec le moyen de corrélation destiné à traiter le signal émis le premier, à savoir le moyen de corrélation 14 dans l'exemple envisagé ci-dessus.

Ce système de retard peut être monté en amont ou en aval dudit moyen de corrélation 14 dans le sens de transmission des informations et est destiné à retarder de ladite durée Tr la transmission du signal, soit vers le moyen de corrélation 14 lorsqu'il est agencé en amont de ce dernier, soit vers les moyens d'addition 16 et de soustraction 19 lorsqu'il est agencé en aval, c'est-à-dire à la sortie dudit moyen de corrélation 14.

Selon une autre variante de réalisation de l'invention, un tel système de retard est monté en série avec chacun desdits moyens de corrélation 14 et 15, en aval de ces derniers dans le sens de transmission des informations, et lesdits moyens d'addition 16 et de soustraction 19 font l'addition et la soustraction des différentes associations possibles des signaux retardés et non retardés engendrés alors, et forment donc plusieurs signaux de somme et de différence, ce qui permet d'augmenter le domaine de calcul des vitesses susceptibles d'être déterminées par le dispositif conforme à l'invention.

On notera que le dispositif 1 conforme à l'invention peut être mis en oeuvre sur de nombreux types de radar, par exemple sur un radar équipé d'un filtre d'élimination des échos fixes en permettant de mesurer les vitesses des cibles mobiles, ou sur un radar à effet Doppler à impulsion en permettant de lever l'indétermination de la mesure de vitesse prélevée à la sortie des filtres dudit radar.

Toutefois, la présente invention est particulièrement avantageuse lorsque le dispositif de télédétection est réalisé sous forme d'un radar à synthèse d'ouverture placé à bord d'un aéronef pour surveiller un territoire survolé par ledit aéronef. Ledit radar peut former alors des images cartographiques d'un terrain survolé à partir des informations fournies par le calculateur 22. Dans ce cas, ledit radar peut former deux images différentes : une première image obtenue à partir des informations fournies par le moyen d'addition 16 et une seconde image obtenue à partir des informations fournies par le moyen de soustraction 19.

Ladite première image permet de visualiser tous les points réfléchissants sur ledit terrain, qu'ils soient immobiles ou en mouvement (à condition que les mouvements ne soient pas trop rapides pour éviter des effets de défocalisation du radar à synthèse d'ouverture). Toutefois, les points en mouvement sont projetés sur l'image en une position écartée de leur position réelle, par un effet spécifique du traitement des cibles mobiles par le radar à synthèse d'ouverture.

La seconde image, quant à elle, permet de visualiser uniquement les cibles mobiles et de mesurer leurs vitesses de déplacement. Les vitesses ainsi mesurées peuvent ensuite être utilisées pour corriger les erreurs de position des points réfléchissants sur ladite première image destinée à former l'image cartographique correspondante du terrain survolé.

## Revendications

1. Procédé pour déterminer, au moyen d'un dispositif de télédétection (1) du type radar ou sonar à compression d'impulsion, la vitesse (V) d'un mobile (2) en direction dudit dispositif de télédétection (1), procédé selon lequel :
- on émet deux impulsions (S1, S2) associées et modulées en fréquence selon des lois de variation linéaires et continues (L1, L2), l'une desdites impulsions (S1) étant modulée selon une loi de variation croissante (L1) et l'autre (S2) selon une loi de variation décroissante (L2) ;
- on détecte lesdites impulsions après leur réflexion sur ledit mobile (2) ; et
- on traite lesdites impulsions détectées de manière à réduire leur durée et à augmenter leur amplitude,
**caractérisé en ce que** :
- on forme un signal de somme (Sm) par l'addition des deux impulsions ainsi traitées ;
- on forme un signal de différence (Sd) par la soustraction des deux impulsions ainsi traitées ;
- on divise le signal de différence (Sd) par la valeur maximale (Smax) du signal de somme (Sm) ;
- on calcule la dérivée du signal de différence ainsi divisé ; et
- on déduit la vitesse (V) du mobile (2) à partir de ladite dérivée, ladite dérivée étant proportionnelle à la vitesse (V) à l'instant (to) où ledit signal de somme (Sm) présente sa valeur maximale (Smax).

2. Procédé selon la revendication 1,
**caractérisé en ce que** l'on émet les deux impulsions simultanément.

3. Procédé selon la revendication 1,
**caractérisé en ce que** l'on émet les deux impulsions successivement après un temps de retard déterminé et **en ce que** l'on prend en compte ce temps de retard lors de la détection et lors du traitement des impulsions, après leur réflexion sur le mobile.

4. Procédé selon l'une quelconque des revendications 1 à 3,
**caractérisé en ce que** l'on détermine la distance entre ledit mobile (2) et le dispositif de télédétection (1) à partir dudit signal de somme (Sm).

5. Dispositif de télédétection pour la mise en oeuvre du procédé spécifié sous l'une quelconque des revendications 1 à 4, ledit dispositif de télédétection (1) comportant :
- un système émetteur (3) susceptible d'émettre des impulsions modulées en fréquence ;
- un système récepteur (4) susceptible de détecter les impulsions émises par ledit système émetteur (3) et réfléchies par le mobile (2) ; et
- un système de traitement de signal (5) associé audit système récepteur (4),
ledit système émetteur (3) étant susceptible d'émettre deux impulsions associées, dont l'une est modulée selon une loi de variation croissante et l'autre est modulée selon une loi de variation décroissante, **caractérisé en ce que** ledit système de traitement de signal (5) comporte :
- deux moyens de corrélation (14, 15) destinés à réduire la durée et à augmenter l'amplitude des impulsions détectées, chacun desdits moyens de corrélation étant adapté à l'une desdites impulsions ;
- un moyen d'addition (16) destiné à effectuer l'addition des deux impulsions traitées ;
- un moyen de soustraction (19) destiné à effectuer la soustraction des deux impulsions traitées ; et
- un calculateur (22) relié auxdits moyens d'addition (16) et de soustraction (19) et susceptible de déterminer la vitesse (V) du mobile (2).

6. Dispositif selon la revendication 5,
**caractérisé en ce que** ledit système émetteur (3) comporte :
- un générateur de signal (7) susceptible d'engendrer un signal modulé par des fréquences croissantes ;
- un générateur de signal (8) susceptible d'engendrer un signal modulé par des fréquences décroissantes ;
- un moyen de sommation (9) regroupant les signaux engendrés par lesdits générateurs de signal (7, 8) ; et
- un moyen d'émission (12) commandé par lesdits signaux et émettant des impulsions correspondantes.

7. Dispositif selon l'une des revendications 5 ou 6, les deux impulsions étant émises successivement après une durée déterminée,
**caractérisé en ce qu'**un système de retard est monté en série avec le moyen de corrélation traitant l'impulsion émise la première, ledit système de retard retardant la transmission des informations reçues pendant un temps correspondant à ladite durée déterminée.

8. Dispositif selon l'une des revendications 5 ou 6,
**caractérisé en ce qu'**un système de retard, retardant pendant une durée déterminée la transmission des informations reçues, est monté en série avec chacun desdits moyens de corrélation, en aval de ces derniers dans le sens de transmission des informations, et **en ce que** lesdits moyens d'addition et de soustraction font l'addition et la soustraction des différentes associations possibles des signaux retardés et non retardés, les signaux de somme et de différence formés alors permettant d'augmenter le domaine des vitesses calculées.

9. Dispositif de télédétection selon l'une quelconque des revendications 5 à 8 du type radar à synthèse d'ouverture embarqué à bord d'un aéronef et destiné à la surveillance d'un territoire,
**caractérisé en ce que** ledit dispositif forme, à partir des informations disponibles à la sortie dudit calculateur (22) :
- d'une part, une image des cibles fixes et mobiles situées sur ledit territoire, à partir dudit signal de somme (Sm) ; et
- d'autre part, une image des cibles mobiles, à partir dudit signal de différence (Sd), ledit signal de différence (Sd) permettant de plus de calculer la vitesse desdites cibles mobiles.

## Patentansprüche

1. Verfahren, um mit Hilfe einer Fernerfassungsvorrichtung (1) des Radar- oder Sonartyps mit Impulskompression die Geschwindigkeit (V) eines bewegten Ziels (2) in Richtung der genannten Fernerfassungsvorrichtung (1) zu bestimmen, Verfahren, nach dem:
- man zwei Impulse (S1, S2) sendet, die kombiniert und nach Gesetzen linearer und kontinuierlicher Änderung (L1, L2) frequenzmoduliert sind, wobei einer der genannten Impulse (S1) nach einem Gesetz zunehmender Änderung (L1) und der andere (S2) nach einem Gesetz abnehmender Änderung (L2) moduliert wird;
- man erfasst die genannten Impulse nach ihrer Reflexion auf dem genannten bewegten Ziel (2); und
- man verarbeitet die genannten erfassten Impulse, um ihre Dauer zu reduzieren und ihre Amplitude zu vergrößern,
**dadurch gekennzeichnet, dass**:
- man durch Addition der beiden so verarbeiteten Impulse ein Summensignal (Sm) bildet;
- man durch Subtraktion der beiden so verarbeiteten Impulse ein Differenzsignal (Sd) bildet;
- man das Differenzsignal (Sd) durch den maximalen Wert (Smax) des Summensignals (Sm) dividiert;
- man den Differentialquotienten des so dividierten Differenzsignals berechnet; und
- man aus dem genannten Differentialquotienten die Geschwindigkeit (V) des bewegten Ziels (2) ableitet, wobei der genannte Differentialquotient der Geschwindigkeit (V) in dem Moment (to) proportional ist, in dem das genannte Summensignal (Sm) seinen maximalen Wert aufweist (Smax).

2. Verfahren entsprechend Anspruch 1,
**dadurch gekennzeichnet, dass** man die beiden Impulse gleichzeitig sendet.

3. Verfahren entsprechend Anspruch 1,
**dadurch gekennzeichnet, dass** man die beiden Impulse nacheinander sendet, und zwar nach einer bestimmten Verzögerungszeit, und dass man diese Verzögerungszeit bei der Erfassung und der Verarbeitung der Impulse nach ihrer Reflexion auf das bewegte Ziel berücksichtigt.

4. Verfahren entsprechend einem beliebigen der Ansprüche 1 bis 3,
**dadurch gekennzeichnet, dass** man die Entfernung zwischen dem genannten bewegten Ziel (2) und der Fernerfassungsvorrichtung (1) anhand des genannten Summensignals (Sm) berechnet.

5. Fernerfassungsvorrichtung für die Anwendung des unter einem beliebigen der Ansprüche 1 bis 4 spezifizierten Verfahrens, wobei die genannte Fernerfassungsvorrichtung (1) umfasst:
- ein Sendesystem (3), das frequenzmodulierte Impulse senden kann;
- ein Empfangssystem (4), das die vom genannten Sendesystem (3) gesendeten und vom bewegten Ziel (2) reflektierten Impulse erfassen kann; und
- ein Signalverarbeitungssystem (5), das mit dem genannten Empfangssystem (4) kombiniert ist,
wobei das genannte Sendesystem (3) in der Lage ist, zwei kombinierte Impulse zu senden, von denen der eine nach einem Gesetz zunehmender Änderung und der andere nach einem Gesetz abnehmender Änderung moduliert wird, **dadurch gekennzeichnet, dass** das genannte Signalverarbeitungssystem (5) umfasst:
- zwei Korrelationsmittel (14, 15), durch die die Dauer der erfassten Impulse reduziert und ihre Amplitude vergrößert werden soll, wobei jedes der genannten Korrelationsmittel an einen der genannten Impulse angepasst ist;
- ein Additionsmittel (16), das die Addition der beiden verarbeiteten Impulse vornehmen soll;
- ein Subtraktionsmittel (19), das die Subtraktion der beiden verarbeiteten Impulse vornehmen soll; und
- einen Rechner (22), der mit dem Additionsmittel (16) und dem Subtraktionsmittel (19) in Verbindung steht und die Geschwindigkeit (V) des bewegten Ziels (2) ermitteln kann.

6. Vorrichtung entsprechend Anspruch 5,
**dadurch gekennzeichnet, dass** das genannte Sendesystem (3) umfasst:
- einen Signalgenerator (7), der ein durch zunehmende Frequenzen moduliertes Signal erzeugen kann;
- einen Signalgenerator (8), der ein durch abnehmende Frequenzen moduliertes Signal erzeugen kann;
- ein Summenbildungsmittel (9), durch das die von den genannten Signalgeneratoren (7, 8) erzeugten Signale zusammengefasst werden; und
- ein Sendemittel (12), das von den genannten Signalen gesteuert wird und entsprechende Impulse sendet.

7. Vorrichtung entsprechend einem der Ansprüche 5 oder 6, wobei die beiden Impulse nach Ablauf einer bestimmten Dauer nacheinander gesendet werden,
**dadurch gekennzeichnet, dass** ein Verzögerungssystem mit dem Korrelationsmittel, das den zuerst gesendeten Impuls verarbeitet, in Reihe geschaltet wird, wobei das genannte Verzögerungssystem die Übertragung der Informationen, die während einer, der genannten bestimmten Dauer entsprechenden Zeit empfangen wurden, verzögert.

8. Vorrichtung entsprechend einem der Ansprüche 5 oder 6,
**dadurch gekennzeichnet, dass** ein Verzögerungssystem, das während einer bestimmten Dauer die Übertragung der empfangenen Informationen verzögert, mit jedem der genannten Korrelationsmittel in Reihe geschaltet ist, und zwar hinter die letztgenannten Mittel in der Übertragungsrichtung der Informationen, und dadurch, dass das genannte Additionsmittel und das genannte Subtraktionsmittel die Addition und Subtraktion der verschiedenen möglichen Kombinationen der verzögerten und nicht verzögerten Signale vornehmen, wobei die dabei gebildeten Summen- und Differenzsignale es gestatten, den Bereich der berechneten Geschwindigkeiten zu vergrößern.

9. Fernerfassungsvorrichtung entsprechend einem beliebigen der Ansprüche 5 bis 8 des Radartyps mit Öffnungssynthese, die an Bord eines Flugzeugs gebracht wird und zur Überwachung eines Geländes dienen soll,
**dadurch gekennzeichnet, dass** die genannte Vorrichtung anhand der am Ausgang des Rechners (22) anliegenden Informationen
- zum einen - ausgehend vom genannten Summensignal (Sm) - ein Bild der auf dem genannten Gelände befindlichen unbewegten und bewegten Ziele erzeugen kann; und
- zum anderen - anhand des genannten Differenzsignals (Sd) - ein Bild der bewegten Ziele erzeugen kann, wobei das genannte Differenzsignal (Sd) es außerdem gestattet, die Geschwindigkeit der genannten bewegten Ziele zu ermitteln.

## Claims

1. A method for determining, by means of a remote detection device (1) of the pulse-compression radar or sonar type, the speed (V) of an object (2) moving toward said remote detection device (1), a method according to which:
- two associated pulses (S1, S2) are transmitted, frequency-modulated with linear and continuous variation laws (L1, L2), one of said pulses (S1) being modulated with an increasing variation law (L1) and the other (S2) with a decreasing variation law (L2);
- said pulses are detected after they are reflected on said moving object (2); and
- said detected pulses are processed so as to reduce their duration and to increase their amplitude,
**characterized in that**:
- a sum signal (Sm) is formed by adding the two pulses thus processed;
- a difference signal (Sd) is formed by subtracting the two pulses thus processed;
- the difference signal (Sd) is divided by the maximum value (Smax) of the sum signal (Sm);
- the derivative of the difference signal thus divided is calculated; and
- the speed (V) of the moving object (2) is deduced from said derivative, said derivative being proportional to the speed (V) at the instant (to) when said sum signal (Sm) exhibits its maximum value (Smax).

2. The method as claimed in claim 1, **characterized in that** the two pulses are transmitted simultaneously.

3. The method as claimed in claim 1, **characterized in that** the two pulses are transmitted successively after a defined delay time, and **characterized in that** this delay time is taken into account during the detection and during the processing of the pulses, after they have been reflected on the moving object.

4. The method as claimed in any one of claims 1 to 3,
**characterized in that** the distance between said moving object (2) and the remote detection device (1) is determined from said sum signal (Sm).

5. A remote detection device for implementing the method specified under any one of claims 1 to 4, said remote detection device (1) including:
- a transmitter system (3) capable of transmitting frequency-modulated pulses;
- a receiver system (4) capable of detecting the pulses transmitted by said transmitter system (3) and reflected by the moving object (2); and
- a signal processing system (5) associated with said receiver system (4),
said transmitter system (3) being capable of transmitting two associated pulses, one of which is modulated with an increasing variation law and the other of which is modulated with a decreasing variation law, **characterized in that** said signal processing system (5) includes:
- two correlation means (14, 15) intended to reduce the duration and to increase the amplitude of the detected pulses, each of said correlation means being adapted to one of said pulses;
- an addition means (16) intended to carry out the addition of the two processed pulses;
- a subtraction means (19) intended to carry out the subtraction of the two processed pulses; and
- a computer (22) linked to said addition (16) and subtraction (19) means, and capable of determining the speed (V) of the moving object (2).

6. The device as claimed in claim 5, **characterized in that** said transmitter system (3) includes:
- a signal generator (7) capable of generating a signal modulated by increasing frequencies;
- a signal generator (8) capable of generating a signal modulated by decreasing frequencies;
- a summing means (9) grouping together the signals generated by said signal generators (7,8); and
- a transmission means (12) controlled by said signals and transmitting corresponding pulses.

7. The device as claimed in either of claims 5 and 6, the two pulses being transmitted successively after a defined duration, **characterized in that** a delay system is mounted in series with the correlation means processing the pulse transmitted first, said delay system delaying the forwarding of the received information for a time corresponding to said defined duration.

8. The device as claimed in either of claims 5 and 6,
**characterized in that** a delay system, delaying forwarding of the information received for a defined duration, is mounted in series with each of said correlation means, downstream of the latter in the information forwarding direction, and **in that** said addition and subtraction means do the addition and the subtraction of the various possible associations of the delayed and non-delayed signals, the sum and difference signals formed then making it possible to increase the range of calculated speeds.

9. The remote detection device as claimed in any one of claims 5 to 8, of the synthetic-aperture radar type, installed on board an aircraft and intended for territorial surveillance, **characterized in that** said device forms, from information available at the output of said computer (22):
- on the one hand, an image of the fixed and moving targets situated on said territory, from said sum signal (Sm); and
- on the other hand, an image of the moving targets, from said difference signal (Sd), said difference signal (Sd) further making it possible to calculate the speed of said moving targets.
